# EUROPEAN PATENT APPLICATION

(11) **EP 4 434 798 A1**
(43) Date of publication of application: **25.09.2024**
(21) Application number: 24164792.4
(22) Date of filing: 20.03.2024
(51) Int. Cl.: B60L 15/20

(54) **BATTERY ELECTRIC VEHICLE**

(30) Priority: 20.03.2023 JP 2023044466
(71) Applicant: TOYOTA JIDOSHA KABUSHIKI KAISHA, Toyota-shi, Aichi-ken, 471-8571 (JP)
(72) Inventor: ISAMI, Yoichiro, Toyota-shi, 471-8571 (JP); MIZUTANI, Kenji, Toyota-shi, 471-8571 (JP); IKEGAMI, Hirotaka, Toyota-shi, 471-8571 (JP); YASUE, Akihito, Toyota-shi, 471-8571 (JP)
(74) Representative: D Young & Co LLP

(57) **Abstract**

A battery electric vehicle (20) includes: a mode selection device (68) configured to select one travel mode from a plurality of travel modes by an operation of a driver, the plurality of travel modes including a motor travel mode in which a motor (32) is controlled such that required torque required for traveling of the battery electric vehicle (20) is output to a drive shaft (26), and a shift travel mode in which the motor (32) is controlled such that torque output to the drive shaft (26) based on a shift operation by the driver is simulation torque that simulates torque behavior in an engine vehicle equipped with an engine and a stepped transmission; and a control device (50) configured to control the motor (32) such that the battery electric vehicle (20) travels in the travel mode selected by the mode selection device (68). The control device (50) is configured to prohibit a change in the simulation torque while the battery electric vehicle (20) is traveling, when the shift travel mode is selected.

## Description

### BACKGROUND OF THE INVENTION

### 1. Field of the Invention

The present invention relates to a battery electric vehicle.

### 2. Description of Related Art

Conventionally, as a battery electric vehicle of this type, there has been proposed a battery electric vehicle including a motor that outputs power to a drive shaft connected to an axle, and a mode selection device in which one travel mode is selected from a plurality of travel modes including a motor travel mode and a shift travel mode, by an operation of a driver (for example, see Japanese Unexamined Patent Application Publication No. 2022-036845 (JP 2022-036845 A)). The motor travel mode is a travel mode in which the motor is controlled such that required torque required for traveling is output to the drive shaft. The shift travel mode is a travel mode in which the motor is controlled such that torque output to the drive shaft based on a shift operation of the driver is a simulation torque that simulates torque behavior in an engine vehicle equipped with an engine and a stepped transmission.

### SUMMARY OF THE INVENTION

In the battery electric vehicle described above, the battery electric vehicle is able to travel simulating torque behavior in another engine vehicle, by changing the simulation torque, when the shift travel mode is selected. However, when the simulation torque is changed, the torque output to the drive shaft may fluctuate and behavior of the vehicle may change suddenly.

A main object of a battery electric vehicle of the present invention is to suppress sudden changes in behavior of the vehicle.

The battery electric vehicle according to the present invention employs the following means to achieve the above-described main object.

A battery electric vehicle according to the present invention includes a motor configured to output torque to a drive shaft connected to an axle; a mode selection device configured to select one travel mode from a plurality of travel modes by an operation of a driver, the plurality of travel modes including a motor travel mode in which the motor is controlled such that required torque required for traveling of the battery electric vehicle is output to the drive shaft, and a shift travel mode in which the motor is controlled such that torque output to the drive shaft based on a shift operation by the driver is simulation torque that simulates torque behavior in an engine vehicle equipped with an engine and a stepped transmission; and a control device configured to control the motor such that the battery electric vehicle travels in the travel mode selected by the mode selection device. The control device is configured to prohibit a change in the simulation torque while the battery electric vehicle is traveling, when the shift travel mode is selected.

In the battery electric vehicle according to the present invention, when the shift travel mode is selected, the change in the simulation torque is prohibited while the battery electric vehicle is traveling. When the simulation torque is changed, the torque output to the drive shaft may fluctuate. When such a torque fluctuation occurs while the vehicle is traveling, the behavior of the vehicle may change suddenly. However, by prohibiting changes in the simulation torque while the vehicle is traveling, it is possible to suppress sudden changes in the behavior of the vehicle.

In such a battery electric vehicle according to the present invention, the control device may be configured to permit the change in the simulation torque in a case in which a shift position is in a parking range, when the shift travel mode is selected. The control device may be configured to permit the change in the simulation torque in a case in which a parking brake is operated, when the shift travel mode is selected. This allows the simulation torque to be changed while the vehicle is reliably stopped, so the simulation torque can be changed without suddenly changing the behavior of the vehicle.

Moreover, the battery electric vehicle according to the present invention may further include a display device configured to display information. When the shift travel mode is selected, the control device may be configured to display, on the display device, a change reception screen for receiving an instruction to change the simulation torque, and prohibit reception on the change reception screen while the battery electric vehicle is traveling. As a result, since changes are not received while the vehicle is traveling, sudden changes in the behavior of the vehicle can be suppressed.

Furthermore, the battery electric vehicle according to the present invention may further include a display device configured to display information. When the shift travel mode is selected, the control device may be configured to display, on the display device, a change reception screen for receiving an instruction to change the simulation torque while the battery electric vehicle is stopped, and not to display the change reception screen on the display device while the battery electric vehicle is traveling. In this way, since changes are not received while the vehicle is traveling, sudden changes in the behavior of the vehicle can be suppressed.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a configuration showing a schematic configuration of a battery electric vehicle as an embodiment of the present disclosure;
FIG. 2 is a flowchart showing an example of a change permission-prohibition routine that is executed by an ECU;
FIG. 3 is an explanatory diagram showing an example of a change reception screen that is displayed on a display;
FIG. 4 is an explanatory diagram showing an example of a manual mode setting screen that is displayed on the display;
FIG. 5 is an explanatory diagram showing an example of an engine characteristic setting screen that is displayed on the display; and
FIG. 6 is an explanatory diagram showing an example of a manual mode setting screen that is displayed on the display during traveling in a shift travel mode.

### DETAILED DESCRIPTION OF EMBODIMENTS

Next, a mode for carrying out the present invention will be described with use of an embodiment.

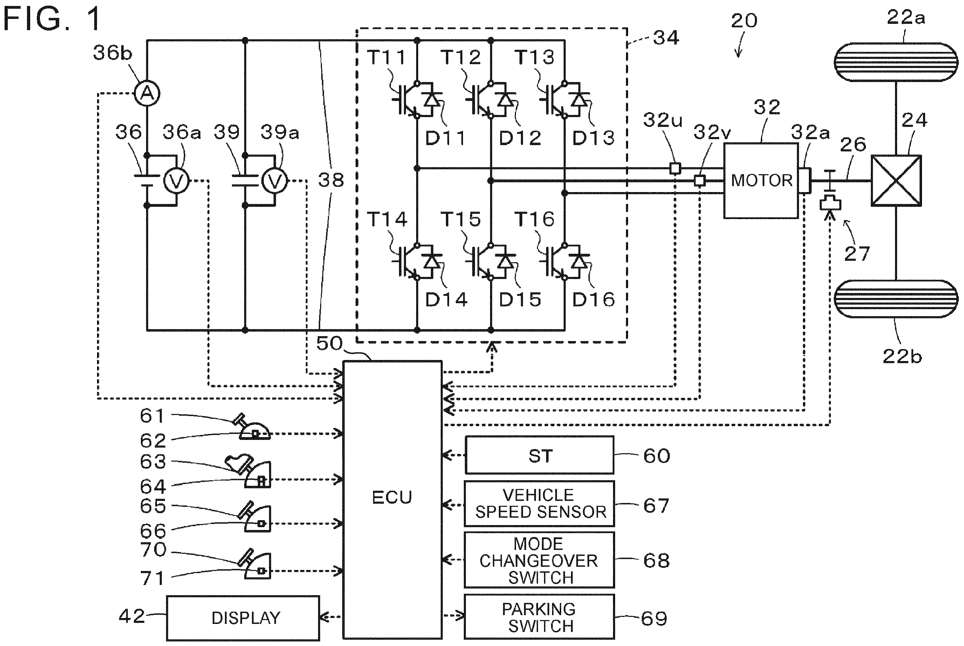

FIG. 1 is a configuration showing a schematic configuration of a battery electric vehicle 20 as an embodiment of the present invention. As illustrated, the battery electric vehicle 20 in the embodiment includes a motor 32 for traveling, an inverter 34, a battery 36, a display 42, and an electronic control unit (referred to as an "ECU", hereinafter) 50.

The motor 32 is configured as a three-phase alternating-current motor, and includes a rotor in which a permanent magnet is buried in a rotor core, and a stator in which a three-phase coil is wound around a stator core. The rotor of the motor 32 is joined to a drive shaft 26 that is connected to drive wheels 22a, 22b through a differential gear 24. A parking brake 27 is attached to the drive shaft 26.

The inverter 34 is used for the drive of the motor 32. The inverter 34 is joined to the battery 36 through electric power lines 38. The inverter 34 includes six transistors T11 to T16 as switching elements and six diodes D11 to D16 that are respectively joined in parallel to the six transistors T11 to T16. The transistors T11 to T16 are disposed as pairs in each of which a positive electrode side line and a negative electrode side line of the electric power lines 38 are respectively a source side and a sink side of two transistors. A joining point between the two transistors in each pair is joined to a coil in a corresponding phase (U-phase, V-phase, or W-phase) of the motor 32. Accordingly, when voltage is applied to the inverter 34, the proportion of the ON-time of each pair of the transistors T11 to T16 is adjusted by the ECU 50, and thereby, a rotating magnetic field is formed in the three-phase coil, so that the motor 32 is driven and rotated.

The battery 36 is configured as a lithium-ion secondary battery or a nickel-hydrogen secondary battery, and is joined to the inverter 34 through the electric power lines 38. A capacitor 39 for smoothing is attached to the electric power lines 38.

The display 42 is installed near a driver's seat. The display 42 is configured as a touch panel type display device that displays a variety of information in a visible manner. The display 42 is controlled by the ECU 50.

The ECU 50 is equipped with a microcomputer that includes a CPU, a ROM, a RAM, a flash memory, and input and output ports. The ECU 50 receives a rotational position θm of the rotor of the motor 32 from a rotational position sensor 32a, phase currents Iu, Iv in the U-phase and V-phase of the motor 32 from current sensors 32u, 32v, a voltage Vb of the battery 36 from a voltage sensor 36a, a current Ib of the battery 36 from a current sensor 36b, and a voltage VL of the electric power lines 38 (the capacitor 39) from the voltage sensor 39a. In addition, the ECU 50 receives a start signal from a start switch (ST) 60, a shift position SP that is the operation position of a shift lever 61 from a shift position sensor 62, an accelerator operation amount Acc that is the depression amount of an accelerator pedal 63 from an accelerator pedal sensor 64, and a brake pedal position BP that is the depression amount of a brake pedal 65 from a brake pedal sensor 66. In addition, the ECU 50 receives a vehicle velocity V from a vehicle speed sensor 67, a switch signal from a mode changeover switch 68, and a depression amount Da of a clutch pedal (pseudo clutch pedal) 70 from a clutch pedal sensor 71. The shift lever 61 is configured to simulate a shift device included in a vehicle on which a manual transmission is mounted. The shift lever 61 allows the selection of a plurality of shift ranges corresponding to variable speed levels of the manual transmission that is simulated, as the shift position SP. For example, the shift lever 61 allows the selection of one range from first to sixth ranges and a neutral range that are simulated. Each time the mode changeover switch 68 is turned on, the mode changeover switch 68 outputs a mode switching instruction for the switching between a motor travel mode and a shift travel mode. The motor travel mode and the shift travel mode will be described later. A parking switch 69 is a switch for causing the shift position SP to be in a parking range. Each time the parking switch 69 is turned on, the parking switch 69 causes the shift position SP to be in the parking range or causes the shift position SP to be out of the parking range. The clutch pedal 70 is configured to simulate a clutch pedal that is mounted on an engine vehicle that is simulated. The clutch pedal 70 is configured such that the disposition and the operational feeling are the same as those of the clutch pedal of the vehicle on which the manual transmission is mounted. The ECU 50 outputs a control signal to the motor 32, a display signal to the display 42, and the like.

In the battery electric vehicle 20 in the embodiment, the ECU 50 controls the motor 32 (the inverter 34) such that the traveling is performed in the motor travel mode or the shift travel mode. In the motor travel mode, the traveling is performed while the motor 32 outputs a required traveling torque Td* that is required for traveling. In the shift travel mode, the traveling is performed such that the behavior of the torque that is output from the motor 32 based on the operation of the shift lever 61 by a driver is the behavior of the torque in the engine vehicle equipped with an engine and the manual transmission as a stepped transmission.

In the motor travel mode, the required traveling torque Td* that is required for traveling (that is required for the drive shaft 26) is set as a torque command Tm* of the motor 32, regardless of the shift position SP and the depression amount Da of the clutch pedal 70, and the transistors T11 to T16 of the inverter 34 are controlled such that the motor 32 is driven at the torque command Tm*. The required traveling torque Td* is set based on the accelerator operation amount Acc and the vehicle velocity V. In this way, the motor 32 is controlled such that the required traveling torque Td* that is required for traveling is output to the drive shaft 26. Thereby, the traveling is performed while the motor 32 outputs the required traveling torque Td*.

In the shift travel mode, a virtual engine speed Ne as an engine speed in the engine vehicle that is simulated is set using a rotation speed Np of the drive shaft 26 (i.e., a rotation speed Nm of the motor 32), a gear ratio (transmission gear ratio) r corresponding to the shift position SP, and a slip-ratio (denoted by "slip") of the clutch pedal 70 based on the depression amount Da of the clutch pedal 70, and, a virtual engine output torque Teout that is output from the engine of the engine vehicle that is simulated is set based on the accelerator operation amount Acc and the virtual engine speed Ne. Based on the slip-ratio, "slip", of the clutch pedal 70, a torque transmission gain k that is the transmissibility of the torque from the engine to the manual transmission is multiplied by the virtual engine output torque Teout, and thereby, a transmission input torque Tmtin is calculated. The torque transmission gain k is set so as to be smaller when the depression amount Da of the clutch pedal 70 is large, compared to when the depression amount Da of the clutch pedal 70 is small, and is set so as to be zero when the depression amount Da of the clutch pedal 70 is a maximal depression amount at which the torque transmission gain k between the engine and the manual transmission is zero. Then, the transmission input torque Tmtin is multiplied by the gear ratio (transmission gear ratio) r corresponding to the shift position SP, and thereby, the transmission output torque (simulation torque) Tmtout is calculated. The transmission output torque Tmtout is set as the torque command Tm* of the motor 32, and the transistors T11 to T16 of the inverter 34 are controlled such that the motor 32 is driven at the torque command Tm*. In this way, the motor 32 is controlled such that the torque that is output to the drive shaft 26 based on the operation of the shift lever 61 by the driver is the transmission output torque (simulation torque) Tmtout that simulates the behavior of the torque in the engine vehicle equipped with the engine and the stepped transmission, and thereby the behavior of the torque that is output from the motor 32 based on the operation of the shift lever 61 by the driver can be the behavior of the torque in the engine vehicle equipped with the engine and the manual transmission. That is, it is possible to perform such a traveling that the engine vehicle equipped with the engine and the manual transmission is simulated, and it is possible to give an operational feeling that allows the driver to feel as if the driver was driving the engine vehicle equipped with the engine and the manual transmission. Further, in the shift travel mode, the ECU 50 controls a speaker (not shown), such that the speaker outputs a sound (engine sound) that is of previously recorded engine sounds for respective engine speeds and that corresponds to the virtual engine speed Ne. This sound from the speaker gives an operational feeling that allows the driver to feel as if the driver was driving the engine vehicle equipped with the engine and the manual transmission.

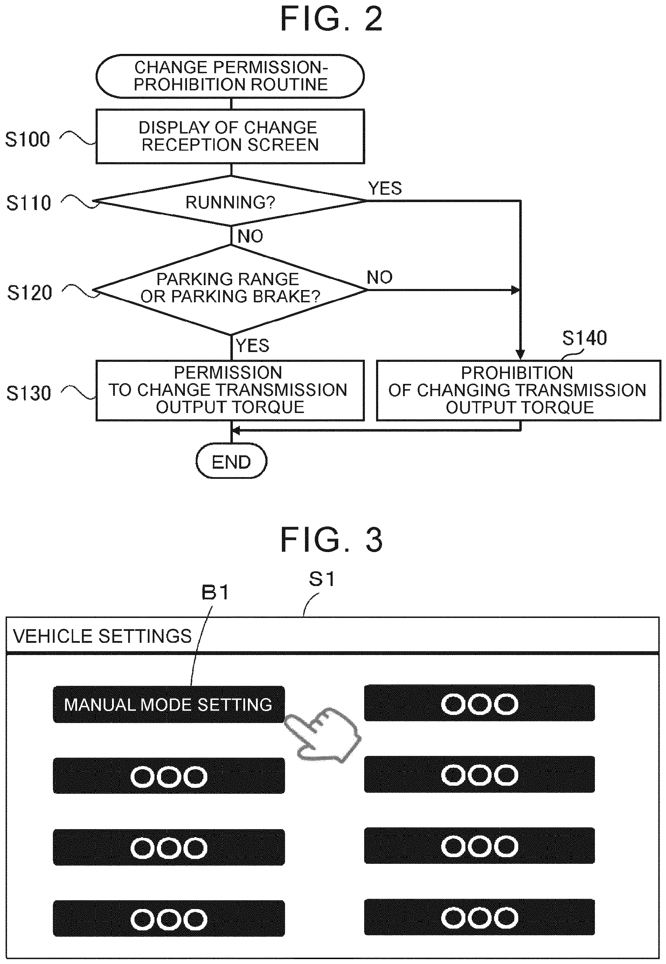

Next, the operation of the battery electric vehicle 20 in the embodiment configured as described above, particularly, the operation when the transmission output torque (simulation torque) Tmtout is changed in the shift travel mode will be described. FIG. 2 is a flowchart showing an example of a change permission-prohibition routine that is executed by the ECU 50. The routine is executed every predetermined time (for example, every several milliseconds), when the shift travel mode is selected by the mode changeover switch 68.

When the routine is executed, the CPU of the ECU 50 executes a process of displaying a change reception screen S1 on the display 42 (S100). FIG. 3 is an explanatory diagram showing an example of the change reception screen S 1 that is displayed on the display 42. The change reception screen S1 is a screen for receiving an instruction to change the transmission output torque (simulation torque) Tmtout from an occupant (the occupant includes a driver and a passenger of a vehicle). The change reception screen S 1 is displayed on the display 42 when the shift travel mode is selected. On the change reception screen S 1, as shown in FIG. 3, a plurality of buttons that can be selected by the occupant, as exemplified by a manual mode setting button B 1 is displayed.

Subsequently, the CPU of the ECU 50 determines whether the vehicle is traveling (running) (S110). When the vehicle is not traveling, it is determined whether the shift position SP is set so as to be in the parking range by the parking switch 69 and whether the parking brake 27 is operated (S120). When the shift position SP is in the parking range or the parking brake 27 is operated, the CPU of the ECU 50 permits the change in the transmission output torque (simulation torque) Tmtout (S130), and ends the routine.

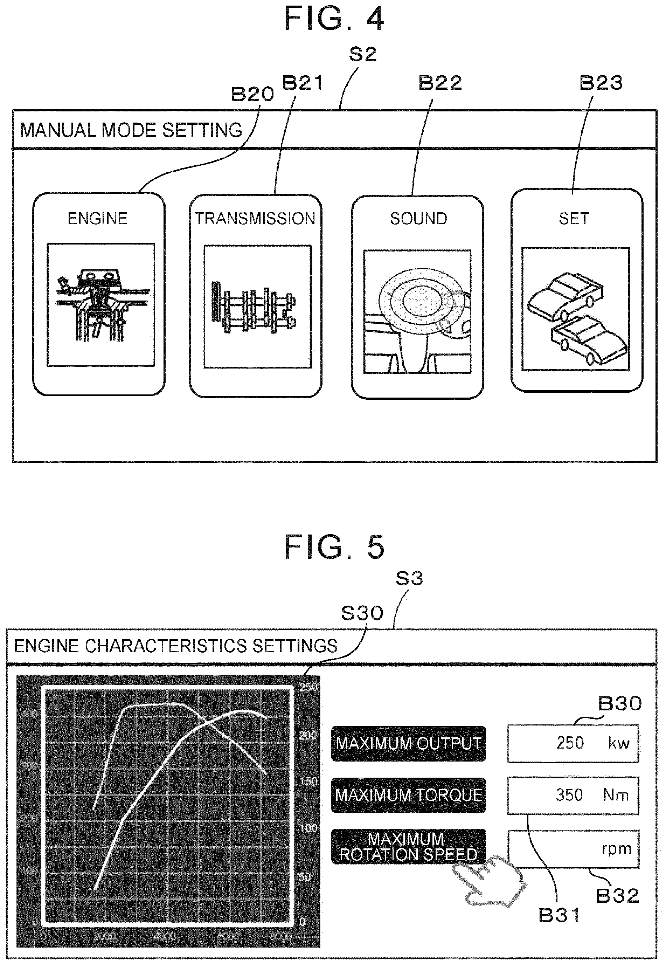

FIG. 4 is an explanatory diagram showing an example of a manual mode setting screen S2 that is displayed on the display 42. FIG. 5 is an explanatory diagram showing an example of an engine characteristic setting screen S3 that is displayed on the display 42. In the case where the change in the transmission output torque (simulation torque) Tmtout is permitted, the ECU 50 displays the manual mode setting screen S2 shown in FIG. 4, instead of the change reception screen S1, when the manual mode setting button B1 on the change reception screen S1 is selected by the occupant. An engine setting button B20 for setting the torque characteristic of the engine that is simulated in the shift travel mode, a transmission setting button B21 for setting the manual transmission that is simulated, a sound setting button B22 for selecting the engine sound that is simulated, and a set setting button B23 for selecting one vehicle type from a plurality of vehicle types equipped with the engine and the manual transmission are displayed on the manual mode setting screen S2.

When the engine setting button B20 is selected on the manual mode setting screen S2 by the occupant, the engine characteristic setting screen S3 shown in FIG. 5 is displayed instead of the manual mode setting screen S2. A performance display screen S30 on which an engine performance curve showing a torque characteristic and an output characteristic while the abscissa axis indicates engine speed is displayed, and input buttons B30, B31, B32 for inputting the maximum output, maximum torque and maximum speed on the engine performance curve are displayed on the engine characteristic setting screen S3. When the maximum output, the maximum torque and the maximum speed are input through the input buttons B30, B31, B32, the engine performance curve that is displayed on the performance display screen S30 is changed depending on the input numerical values. In the shift travel mode, the engine performance curve that is displayed on the performance display screen S30 is adopted as the performance curve of the engine that is simulated, and the virtual engine output torque Teout that is output from the engine of the engine vehicle that is simulated is set based on the accelerator operation amount Acc and the virtual engine speed Ne. In this way, the torque characteristic of the engine of the engine vehicle that is simulated can be changed through the screen that is displayed on the display 42. Thereby, the transmission output torque (simulation torque) Tmtout can be changed.

When the transmission setting button B21 is selected on the manual mode setting screen S2 by the occupant, a transmission characteristic setting screen (not shown) is displayed instead of the manual mode setting screen S2. A performance display screen on which a shift characteristic curve showing a drive power characteristic and a speed characteristic of the engine while the abscissa axis indicates vehicle velocity (vehicle speed), and an input button for inputting the transmission gear ratio at each variable speed level are displayed on the transmission characteristic setting screen. When the transmission gear ratio at the variable speed level is input through the input button, the transmission gear ratio at the variable speed level is changed to the input numerical values, and the shift characteristic curve is changed in accordance with the input numerical value. In the shift travel mode, the shift characteristic curve that is displayed on the performance display screen is adopted as the shift characteristic curve of the manual transmission that is simulated, and the transmission output torque (simulation torque) Tmtout is calculated. In this way, the characteristic of the transmission of the engine vehicle that is simulated can be changed through the screen that is displayed on the display 42. Thereby, the transmission output torque (simulation torque) Tmtout can be changed.

When the sound setting button B22 is selected on the manual mode setting screen S2 by the occupant, a sound setting screen (not shown) is displayed instead of the manual mode setting screen S2. The sound volume of the engine sound can be changed on the sound setting screen.

When the set setting button B23 is selected on the manual mode setting screen S2 by the occupant, a simulated vehicle setting screen (not shown) is displayed instead of the manual mode setting screen S2. The engine vehicle that is simulated in the shift travel mode can be changed from the present vehicle, on the simulated vehicle setting screen. Thereby, the transmission output torque (simulation torque) Tmtout can be changed.

In this way, in the case where the vehicle is stopped in the shift travel mode and where the shift position SP is in the parking range or the parking brake 27 is operated, the transmission output torque (simulation torque) Tmtout is permitted and the change on the change reception screen S 1 is received, so that the transmission output torque (simulation torque) Tmtout and the sound can be changed. When the shift position SP is in the parking range or when the parking brake 27 is operated, the battery electric vehicle 20 is reliably stopped, and therefore, the change can be performed without suddenly changing the behavior of the vehicle.

When the battery electric vehicle 20 is traveling in S 110 or when the shift position SP is not in the parking range and the parking brake 27 is not operated in S 120 although the battery electric vehicle 20 is stopped in S 110, the change in the transmission output torque (simulation torque) Tmtout is prohibited (S140), and the routine ends. In this case, even when the manual mode setting button B1 is selected on the change reception screen S1 displayed on the display 42, the display is not changed, and the display of the change reception screen S1 is maintained, so that the transmission output torque (simulation torque) Tmtout and the sound cannot be changed. In this way, when the vehicle is traveling in the shift travel mode, or when the shift position SP is not in the parking range and the parking brake 27 is not operated even during the vehicle stop, the change in the transmission output torque (simulation torque) Tmtout is prohibited and the change in the sound is prohibited. Thereby, it is possible to suppress sudden changes in the behavior of the vehicle when the vehicle is traveling or is not reliably stopped.

In the above-described battery electric vehicle 20 in the embodiment, when the shift travel mode is selected, the change in the transmission output torque (simulation torque) Tmtout is prohibited during the traveling, and thereby, sudden changes in the behavior of the vehicle can be suppressed.

Further, in the battery electric vehicle 20 in the embodiment, in the case where the shift travel mode is selected, where the battery electric vehicle 20 is stopped, and where the shift position SP is in the parking range or the parking brake 27 is operated, the change in the transmission output torque (simulation torque) Tmtout is permitted, and thereby, the transmission output torque (simulation torque) Tmtout can be changed without suddenly changing the behavior of the vehicle.

Furthermore, in the battery electric vehicle 20 in the embodiment, when the shift travel mode is selected, the change reception screen S1 for receiving the instruction to change the transmission output torque (simulation torque) Tmtout is displayed on the display 42, and the reception on the change reception screen S1 is prohibited during the traveling, and thereby, sudden changes in the behavior of the vehicle can be suppressed.

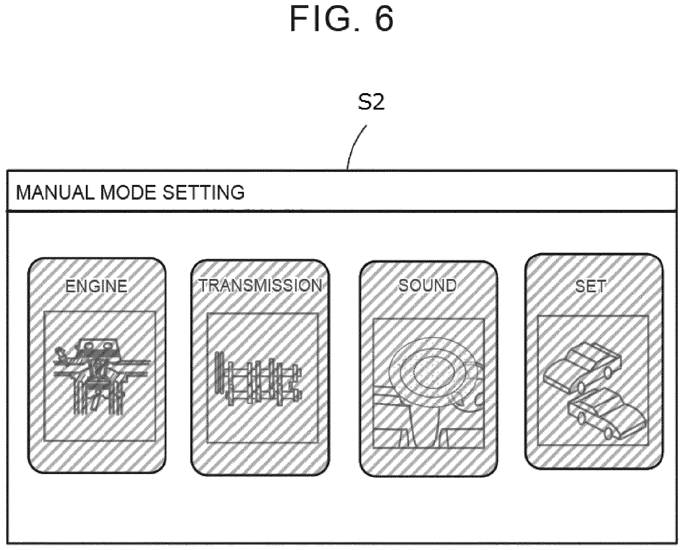

In the battery electric vehicle 20 in the embodiment, when the shift travel mode is selected, the reception on the change reception screen S1 is prohibited during the traveling, and thereby, the change in the transmission output torque (simulation torque) Tmtout is prohibited. However, when the manual mode setting button B1 is selected on the change reception screen S1 displayed on the display 42, the change in the transmission output torque (simulation torque) Tmtout may be prohibited by displaying the manual mode setting screen S2 instead of the change reception screen S1, graying the engine setting button B20, the transmission setting button B21, the sound setting button B22 and the set setting button B23 on the manual mode setting screen S2 as shown in FIG. 6 (hatching is provided in the figure), and making it impossible to select the buttons.

In the battery electric vehicle 20 in the embodiment, when the shift travel mode is selected, the change reception screen S1 is displayed on the display 42, regardless of whether the battery electric vehicle 20 is traveling. However, the change reception screen S1 may be avoided from being displayed on the display 42, during the traveling.

In the battery electric vehicle 20 in the embodiment, the display 42 is a touch panel type display device, and when the shift travel mode is selected, the occupant performs selection on the display 42, for the selection on the change reception screen S 1 or the manual mode setting screen S2 and for the change on the engine characteristic setting screen S3, the transmission characteristic setting screen, the sound setting screen or the simulated vehicle setting screen. However, the selection on the change reception screen S 1 or the manual mode setting screen S2 and the change on the engine characteristic setting screen S3, the transmission characteristic setting screen, the sound setting screen or the simulated vehicle setting screen may be performed through a portable terminal that is carried by the occupant and that can communicate with the ECU 50. In this case, the change in the transmission output torque (simulation torque) Tmtout may be prohibited during the traveling, by avoiding the reception of the instruction from the portable terminal.

In the battery electric vehicle 20 in the embodiment, in the case where the shift travel mode is selected, where the battery electric vehicle 20 is stopped, and where the shift position SP is in the parking range or the parking brake 27 is operated, the change in the transmission output torque (simulation torque) Tmtout is permitted. However, when the shift position SP is in the parking range or the parking brake 27 is operated, the change in the transmission output torque (simulation torque) Tmtout may be permitted without considering whether the battery electric vehicle 20 is stopped, or, the change in the transmission output torque (simulation torque) Tmtout may be permitted based on only one of the case where the shift position SP is in the parking range and the case where the parking brake 27 is operated. Alternatively, the change in the transmission output torque (simulation torque) Tmtout may be permitted during the vehicle stop, regardless of whether the shift position SP is in the parking range or whether the parking brake 27 is operated.

In the battery electric vehicle 20 in the embodiment, the shift position SP is changed by the operation of the shift lever 61 by the driver. However, the present invention can be applied also to a case where two paddle switches are disposed near a steering wheel and where the shift position SP is changed by performing upshift or downshift based on a paddle signal from the paddle switches.

The correspondence relation between major elements of the embodiment and major elements of the present invention described in the summary of the invention will be described. In the embodiment, the motor 32 is an example of the "motor", the mode changeover switch 68 is an example of the "mode selection device", and the ECU 50 is an example of the "control device".

The correspondence relation between major elements of the embodiment and major elements of the present invention described in the summary of the invention does not limit elements of the present invention described in the summary of the invention, because the embodiment is an example for specifically describing a mode for carrying out the present invention described in the summary of the invention. That is, the present invention described in the summary of the invention should be interpreted based on the description in the summary of the invention, and the embodiment is just a specific example of the present invention described in the summary of the invention.

The mode for carrying out the present invention has been described above with use of the embodiment. The present invention is not limited to the embodiment at all, and naturally, can be carried out as various modes without departing from the spirit of the present invention.

The present invention can be utilized in the battery electric vehicle manufacturing industry.

## Claims

1. A battery electric vehicle (20) comprising:
a motor (32) configured to output torque to a drive shaft (26) connected to an axle;
a mode selection device (68) configured to select one travel mode from a plurality of travel modes by an operation of a driver, the plurality of travel modes including a motor travel mode in which the motor (32) is controlled such that required torque required for traveling of the battery electric vehicle (20) is output to the drive shaft (26), and a shift travel mode in which the motor (32) is controlled such that torque output to the drive shaft (26) based on a shift operation by the driver is simulation torque that simulates torque behavior in an engine vehicle equipped with an engine and a stepped transmission; and
a control device (50) configured to control the motor (32) such that the battery electric vehicle (20) travels in the travel mode selected by the mode selection device (68),
wherein the control device (50) is configured to prohibit a change in the simulation torque while the battery electric vehicle (20) is traveling, when the shift travel mode is selected.

2. The battery electric vehicle (20) according to claim 1, wherein the control device (50) is configured to permit the change in the simulation torque in a case in which a shift position is in a parking range, when the shift travel mode is selected.

3. The battery electric vehicle (20) according to claim 1, wherein the control device (50) is configured to permit the change in the simulation torque in a case in which a parking brake is operated, when the shift travel mode is selected.

4. The battery electric vehicle (20) according to claim 1, further comprising a display device (42) configured to display information, wherein
when the shift travel mode is selected, the control device (50) is configured to display, on the display device (42), a change reception screen (S 1) for receiving an instruction to change the simulation torque, and prohibit reception on the change reception screen (S1) while the battery electric vehicle (20) is traveling.

5. The battery electric vehicle (20) according to claim 1, further comprising a display device (42) configured to display information, wherein
when the shift travel mode is selected, the control device (50) is configured to display, on the display device (42), a change reception screen (S1) for receiving an instruction to change the simulation torque while the battery electric vehicle (20) is stopped, and not to display the change reception screen (S1) on the display device (42) while the battery electric vehicle (20) is traveling.
